# EUROPÄISCHE PATENTANMELDUNG

(11) **EP 4 755 849 A1**
(43) Veröffentlichungstag der Anmeldung: **10.06.2026**
(21) Anmeldenummer: 25219829.6
(22) Anmeldetag: 01.12.2025
(51) Int. Cl.: C01B 32/21

(54) **VORRICHTUNG UND VERFAHREN ZUM VERRUNDEN VON GRAPHITFLOCKEN EINES GRAPHITMATERIALS**

(30) Priorität: 05.12.2024 DE 102024136383
(71) Anmelder: NETZSCH Trockenmahltechnik GmbH, 95100 Selb (DE)
(72) Erfinder: Winter, Frank, 63165 Mühlheim (DE); Schöbel, Patrick, 60596 Frankfurt (DE)
(74) Vertreter: Misselhorn, Hein-Martin

(57) **Zusammenfassung**

Vorrichtung zum Verrunden eines Graphit-basierten Materials mit einem Arbeitsraum, in dem die Verrundung stattfindet, einer Aufgabeeinrichtung zur Zuführung des Graphit-basierten Materials in den Arbeitsraum; einer Mehrzahl von im Arbeitsraum befindlichen rotatorisch umlaufend ausgebildeten Verrundungswerkzeugen in Gestalt von Schlägern, die an einer um eine Drehachse und in einer Drehrichtung rotierenden Scheibe angeordnet sind, bevorzugt mit mindestens einem Leitapparat und mit einer Trenneinrichtung zum Abtrennen von Feinmaterial und Feinstmaterial, mit einem Produktauslass und bevorzugt mit einem Abdeckring, der oberhalb der Verrundungswerkzeuge angeordnet ist, wobei die Scheibe pro Umfangsmeter mindestens 40, besser mindestens 45 und bevorzugt mindestens 55 Schläger trägt.

## Beschreibung

Die vorliegende Erfindung betrifft eine Vorrichtung zum Verrunden von Graphitflocken eines Graphitmaterials gemäß den Merkmalen der unabhängigen Ansprüche.

### TECHNISCHER HINTERGRUND

Lithiumionen-Batterien kommen derzeit in einer Vielzahl elektrischer Geräte wie beispielsweise Laptops oder Handwerkzeugen und auch Automobilen zum Einsatz. Als Anodenmaterial wird hierbei typischerweise Graphit verwendet, da Graphit zum einen eine gute elektrische Leitfähigkeit aufweist und sich damit gut für die Stromabgabe nach außen eignet. Zudem können sich die Lithium-Ionen während des Ladens des Akkus gut in der Gitterstruktur des Graphits anlagern.

Ein Problem bei der Verwendung von Graphit als Anodenmaterial besteht allerdings darin, dass Graphit in der Natur in der Regel als sogenannter Flockengraphit auftritt, während für die Anwendung als Anodenmaterial sphärischer Graphit deutlich besser geeignet ist. Die Verwendung von sphärischem Graphit führt zu einer höheren Energiedichte und einer höheren Lebensdauer des Akkumulators.

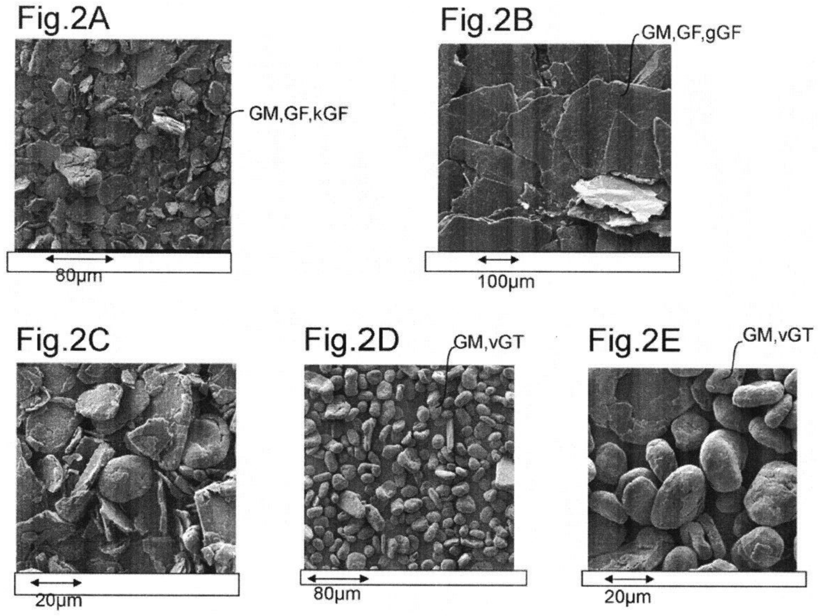

Aus den genannten Gründen muss Flockengraphit vor der Verwendung als Anodenmaterial in sphärisches Graphit umgewandelt werden. Anhand der Fig. 2A bis Fig. 2E lässt sich die Veränderung der Morphologie des Graphits während der Umwandlung von Flockengraphit zu sphärischem Graphit nachvollziehen. In Fig. 2A und Fig. 2B wird das Graphit in Form von Flockengraphit dargestellt, wobei die in Fig. 2A dargestellten Flocken deutlich kleiner sind als die in Fig. 2B dargestellten Flocken. In Fig. 2C wird eine Zwischenstufe gezeigt, in der die Graphitpartikel bereits teilweise verrundet sind. In Fig. 2D und Fig. 2E wird schließlich das sphärische Graphit dargestellt.

### STAND DER TECHNIK

Die Umwandlung von Flockengraphit zu sphärischem Graphit oder von Grünkoks in entsprechende sphärische Partikel ist im Stand der Technik bereits bekannt und wird als Sphäroidisierung bezeichnet.

Vorwegzuschicken ist, dass im Folgenden überall dort, wo von Graphitmaterial und Graphitpartikeln die Rede ist, auch die entsprechenden Vorstufen in Gestalt von Grünkoks und den entsprechenden Grünkokspartikeln begrifflich eingeschlossen sind, ebenso, wie andere Graphit-basierte Partikel. Dies gilt, solange nicht ausgeschlossen ist, dass die Begriffe "Graphitmaterial und Graphitpartikel" enger, nämlich im eigentlichen Sinne, zu verstehen sind, was bevorzugt ist. Dieser Hinweis gilt für den gesamten nachfolgenden Text, auch wenn er nicht jeweils wiederholt wird.

Bei der Umwandlung in sphärisches Graphit werden die einzelnen Graphitpartikel nicht etwa durch Mahl- oder Schleifvorgänge in eine kugelige Form gebracht, sondern die Partikel werden durch eine mehrfache sogenannte Faltung sphäroidisiert. Hierfür werden die einzelnen Graphitpartikel gezielt so in Bewegung versetzt, dass sie mit entsprechend vorgesehenen Hindernissen kollidieren. Die kinetische Energie, mit der die Graphitpartikel beaufschlagt werden, wird dabei so gewählt, dass die Graphitpartikel bei der Kollision (möglichst) nicht zertrümmert, sondern nur deformiert werden. Diese Deformation wird als Faltung bezeichnet.

Bevor die flockenförmigen Graphitpartikel sphäroidisiert werden, werden sie in der Regel zunächst einem Mahlvorgang unterzogen. Dies erfolgt typischerweise mittels einer Sichtermühle. Dieser Prozessschritt dient dazu, die Graphitpartikel zu verkleinern und Graphitflocken zu erzeugen, die klein genug sind, um in dem nachfolgenden Sphäroidisierungsschritt sphärisches Graphit der gewünschten Qualität bzw. Feinheitsklasse erzeugen zu können.

Die eigentliche Sphäroidisierung erfolgt schließlich in einem sogenannten Sphärosichter. Ein Sphärosichter umfasst einen Arbeitsraum, in dem die eingebrachten Graphitpartikel mit einem oder mehreren sich (typischerweise rotatorisch) bewegenden Verrundungswerkzeugen in Kontakt gebracht werden. Durch den Kontakt mit den Verrundungswerkzeugen wird den Partikeln eine Bewegung in Richtung eines Hindernisses, welches auch als Prallfläche bezeichnet wird, aufgezwungen. Bei der Kollision der Partikel an dem Hindernis kommt es zu dem bereits beschriebenen Faltvorgang.

Um eine möglichst gute Sphäroidisierung zu bewirken, werden die Partikel mittels eines extern in den Sphärosichter eingebrachten Prozessgasstroms so im Sphärosichter geführt, dass die Partikel mehrmals von den Verrundungswerkzeugen in Richtung der Prallfläche beschleunigt und dort gefaltet werden. Die Partikel zirkulieren demnach während des Faltprozesses so durch den Arbeitsraum des Sphärosichters, dass alle Partikel mehrfach von Verrundungswerkzeugen in Richtung der Prallfläche beschleunigt werden.

Nach einer bestimmten Behandlungszeit und entsprechend vielen Faltvorgängen ist die gewünschte Produktqualität erreicht und die Graphitpartikel weisen eine sphärische Gestalt auf. Da während der Sphäroidisierung keine reine Deformation, sondern in geringem Maße auch eine Absplitterung stattfindet, müssen die sphärischen Graphitpartikel schließlich noch über einen integrierten oder externen Sichter von dem anfallenden Feingut getrennt werden.

Ein Problem bei bisher bekannt gewordenen Sphärosichtern besteht darin, dass die Graphitpartikel entweder nicht nur gefaltet, sondern zu einem relativ hohen Teil auch ungewollt zertrümmert und damit zu Ausschuss werden, oder - wenn der Prozess milder eingestellt ist - für eine verhältnismäßig lange Zeit durch den Arbeitsraum des Sphärosichters zirkulieren müssen, bis alle Partikel im gewünschten Maße gefaltet bzw. sphäroidisiert sind.

### DAS DER ERFINDUNG ZUGRUNDE LIEGENDE PROBLEM

Die Aufgabe der Erfindung besteht darin, eine Vorrichtung bereitzustellen, um einen Prozess im Batchverfahren zur Sphäroidisierung von feinen Pulvern noch effizienter auszuführen.

### ERFINDUNGSGEMÄSSE LÖSUNG

Erfindungsgemäß wird dieses Problem mit den Merkmalen des auf die Vorrichtung gerichteten Hauptanspruchs gelöst. Dementsprechend erfolgt die Lösung des Problems mit einer Vorrichtung zum Verrunden eines Graphitmaterials. Die Vorrichtung umfasst einen Arbeitsraum, in dem die Verrundung stattfindet, sowie eine Aufgabeeinrichtung zur - zumeist - batchweisen Zuführung des Graphitmaterials in den Arbeitsraum. Zudem umfasst die Vorrichtung eine Mehrzahl von im Arbeitsraum befindlichen rotatorisch umlaufend ausgebildeten Verrundungswerkzeugen in Gestalt von Schlägern.

Die Schläger sind an einer um eine Drehachse und in einer Drehrichtung rotierenden Scheibe angeordnet. Bevorzugt sind weiterhin mindestens ein Leitapparat und eine Trenneinrichtung zum Abtrennen von Feinmaterial und Feinstmaterial in der Vorrichtung vorgesehen. Zudem umfasst die Vorrichtung einen Produktauslass sowie einen Abdeckring, der oberhalb der Verrundungswerkzeuge angeordnet ist.

Die erfindungsgemäße Vorrichtung zeichnet sich dadurch aus, dass die Scheibe pro Umfangsmeter mindestens 40, besser mindestens 45 und bevorzugt mindestens 55 voneinander beabstandete Schläger trägt. Durch diese erfindungsgemäße Rotorgestaltung kann das Material länger im Bereich der radialen Innenkante der Schläger gehalten und dort beansprucht werden. Das ist vorteilhaft, weil die hier stattfindenden Kollisionen zwischen den Partikeln und den Schlägern milder sind und daher für ein Falten der Partikel ohne nennenswerten Partikelbruch prädestiniert sind.

Grundsätzlich lässt sich sagen, dass durch die erfinderische Gestaltung ein entscheidender funktionaler Unterschied zu entsprechenden, aber nur scheinbar ähnlich aufgebauten Sichtermühlen geschaffen wird.

Bei Sichtermühlen kommt die bestimmungsgemäße Mahlwirkung zu einem wesentlichen Teil auch dadurch zustande, dass die zu vermahlenden Partikel von den Schlägern erfasst und mit Wucht radial nach außen geschleudert werden, um dann mit hoher Intensität gegen die scharfkantig gezackte Prallfläche zu prallen, mit der das Gehäuse der Sichtermühle ausgestattet ist und die Scheibe mit den Schlägern an ihrem Außenumfang wie ein Gürtel umgibt.

Bei einem erfindungsgemäß gestalteten Sphärosichter ist der Hauptwirkungsort ein anderer. Es ist nicht länger die eben benannte Prallfäche, denn die ist bei einem erfindungsgemäßen Sphärosichter bevorzugt deutlich weniger aggressiv ausgeprägt. Dies deshalb, weil sie nun nur noch die Aufgabe hat, die dort auftreffenden Partikel im Wesentlichen bruchfrei derart nach oben abzulenken, dass sie wieder rezirkuliert werden, also erneut aus radial einwärtiger Richtung kommend mit dem radial inneren Ende der Schläger kollidieren, um weiter gefaltet zu werden.

Stattdessen ist der Hauptwirkungsort bei einem erfindungsgemäßen Sphärosichter das radial einwärtige erste Sechstel und noch besser das einwärtige erste Zehntel der Schläger und idealerweise die dort anzutreffende Verrundung.

In dem eben definierten Bereich ist eine geringere relative Geschwindigkeitsdifferenz zwischen dem Schläger und dem jeweiligen Partikel anzutreffen. Daher ist der Impuls hier nicht mehr ausreichend für den Bruch. Darüber hinaus gibt es aufgrund der Rundung an der Innenseite der Schläger nach dem Kontakt eine Geschwindigkeitskomponente, welche nach innen in Richtung des Sichterrades zeigt. Dadurch werden die Partikel länger an der Innenkante der Schläger gehalten und es ergibt sich auch aufgrund der erfindungsgemäß großen Schlägerzahl eine enorm hohe Anzahl an leichten, nicht zerkleinerungswirksamen Kontakten. Ebenfalls können die Kontakte zu einem Drall der Partikel führen, der für einen Faltvorgang von Vorteil sein sollte.

### DIE WEITERE ERFINDUNGSGEMÄSSE LÖSUNG

Die Lösung des vorgenannten Problems erfolgt darüber hinaus auch mit einem zu gegebener Zeit zu beanspruchenden Verfahren zum Verrunden eines Graphitmaterials. Dabei tritt das Graphitmaterial in Wirkkontakt mit mindestens einem Verrundungswerkzeug aus einer Mehrzahl von rotatorisch umlaufend ausgebildeten Verrundungswerkzeugen, die in Umfangsrichtung besonders eng zusammenstehen, weil in Umfangsrichtung pro Meter Umfangslänge des Schlägerrades etwa 40 bis 80 Verrundungswerkzeuge bzw. Schläger nebeneinander positioniert sind. Zudem ist oberhalb der Verrundungswerkzeuge idealerweise ein Abdeckring angeordnet, wobei der Abdeckring den Bewegungsraum für einen Graphitmaterial führenden Prozessluftstrom begrenzt und eine Anzahl an Kontakten zwischen dem Graphitmaterial und dem mindestens einen Verrundungswerkzeug erhöht.

Mit dem erfindungsgemäßen Verfahren und der hierfür benutzten Maschine können auf einfache und kostengünstige Weise verrundete Graphitteilchen hergestellt werden, die für die Herstellung von Batterien optimiert sind. Insbesondere werden hierbei die Graphitflocken verrundet, indem die Ecken der Graphitflocken gefaltet und um den Kern der Graphitflocken herumgewickelt werden.

### BEVORZUGTE AUSGESTALTUNGSMÖGLICHKEITEN

Es besteht eine Reihe von Möglichkeiten, die Erfindung so auszugestalten, dass ihre Wirksamkeit oder Brauchbarkeit noch weiter verbessert wird.

So ist es besonders bevorzugt, dass die Seitenflächen bzw. Flanken einiger oder aller Schläger in Gänze oder zumindest an ihrem radial auswärtigen Ende eine Tangente aufweisen, die mit der Radialen an ihrem Tangentenanlagepunkt einen Winkel ALPHA einschließt.

Bei einer solchen Gestaltung werden die Graphitpartikel nicht weitgehend radial nach außen abgeschleudert, sondern treffen schräg auf die Innenoberfläche des Gehäuses und die dort ausgebildete Prall- bzw. Umlenkfläche auf. Hierdurch kommt es zu einer Verbesserung des Rücktransports radial vom Schlägerrad abgeschleuderter Graphitpartikel in den Arbeitsraum.

Der Winkel ALPHA liegt bevorzugt bei unter 25°. In Einzelfällen sind aber auch Winkel bis zu 40° nützlich.

In einer weiteren bevorzugten Ausführungsform werden die Schläger durch Platten gebildet, die bogenförmig nach außen gekrümmt sind.

Hierdurch werden die Partikel nicht im Wesentlichen radial abgeschleudert, sondern mit einer kreisenden Bewegungskomponente. Die Partikel werden hierdurch mit einem verstärkten Drall beaufschlagt. Dieser Drall führt ebenfalls zu einer Verbesserung des Rücktransports radial vom Schlägerrad abgeschleuderter Graphitpartikel in den Arbeitsraum.

Idealerweise gilt für die überwiegende Zahl der Schläger oder für alle Schläger, dass das Verhältnis der Schlägerlänge zur Schlägerbreite mehr als 5 und bevorzugt mehr als 10 beträgt. Hierdurch wird sichergestellt, dass die Schläger eine ausreichende Erstreckung in radialer Richtung aufweisen, um stets mehrere Graphitpartikel gleichzeitig zu beschleunigen. Die Bearbeitungsgeschwindigkeit der Vorrichtung wird hierdurch erhöht. Gleichzeitig kann eine relativ große Anzahl an Schlägern an der Scheibe vorgesehen werden, ohne die Freiräume zwischen den Schlägern zu gering werden zu lassen und damit die freie Zirkulation der Graphitpartikel durch den Arbeitsraum zu sehr zu erschweren.

Die "Schlägerlänge" ist dabei die Erstreckung der Schläger von dem der Drehachse der Scheibe zugewandten Ende bis hin zu dem der Drehachse der Scheibe abgewandten Ende.

Die "Schlägerbreite" ist dabei die mittlere Erstreckung eines Schlägers von der einem ersten unmittelbar benachbarten Schläger zugewandten Seite bis hin zu einem zweiten unmittelbar benachbarten Schläger eines Schlägers.

Vorzugsweise ist die radiale Länge der Schläger und/oder der Abstand unmittelbar benachbarter Schläger und/oder die in Richtung der Drehachse gegebene Höhe der Schläger so gewählt, dass die Mehrheit der Prallvorgänge zwischen den zu verrundenden Partikeln und den Schlägern im Bereich des radial einwärtigen ersten Achtels, besser im Bereich des einwärtigen ersten Neuntels der Schläger stattfinden.

In diesem radial inneren Bereich der Schläger finden überwiegend nur solche Schläge statt, die zu wenig intensiv sind, um die Partikel zum Brechen zu bringen. Bei Sichtermühlen wird dieser Bereich daher möglichst gemieden, da dieser Bereich für die Vermahlung ineffektiv ist und daher jedenfalls nicht als Hauptkollisionszone eingestellt wird. Deswegen stehen bei Sichtermühlen die Schläger in Umfangsrichtung gesehen deutlich weiter auseinander, denn nur so wird es den von Sichtermühlen zu vermahlenen Partikeln möglich, sofort so tief in den Bereich zwischen den Schlägern einzudringen, dass sie einen zertrümmernden Prallschlag erhalten, und zwar von der seitlichen Flanke des Schlägers.

Bei dem erfindungsgemäßen Sphärosichter ist das anders. Hier lässt sich leicht durch Versuche mit den vom Anspruch genannten Parametern die Pumpwirkung der mit den Schlägern besetzten Scheibe einstellen, vergleichbar mit der bekannten Einstellung der Pumpwirkung einer Kreiselpumpe. Bei richtig eingestellter Pumpwirkung findet der überwiegende Teil der Schläge zwischen den zu verrundenden Partikeln und den Schlägern im gewünschten radial einwärtigen Eingangsbereich der Schläger statt, wo die Schläge hinreichend intensiv sind, um eine Faltung zu bewirken, aber nicht aggressiv genug sind, um einen nennenswerten Teil der Partikel zu zerbrechen.

Vorzugsweise ist es so, dass das Verhältnis aus der in radialer Richtung gemessenen Schlägerlänge und dem Außenradius der drehbaren Scheibe, die die Schläger trägt, 0,1 bis 0,25 beträgt und bevorzugt unter 0,2 liegt. Bei Einhaltung dieses Verhältnisses ist gewährleistet, dass die Intensität, mit denen die Schläger auf die Partikel einwirken, groß genug ist, um eine Faltung mit guter Ausbeute zu erreichen, ohne dass es in intolerablem Umfang zu einem Partikelbruch und damit zu Ausschuss kommt.

Idealerweise verändert sich die Höhe der Schläger von deren radial einwärtigem Ende hin zu deren radial auswärtigem Ende, am besten so, dass es vom radial einwärtigen Ende hin zum radial auswärtigen Ende des jeweiligen Schlägers zu einer Höhenreduktion von 10% bis 40% kommt. Hierdurch lässt sich die Geschwindigkeit und damit im Regelfall auch der Volumenstrom zwischen den Schlägern konstant halten. Von Interesse kann dabei insbesondere sein, die Pumpwirkung zu begrenzen, die zwischen benachbarten Schlägern auftritt, um zu verhindern, dass die Partikel zu stark angesaugt werden und sich dann die Hauptkollisionszone zu weit in radial auswärtiger Richtung verlagert.

Bevorzugt ist es so, dass der für die Klassierung wirksame Durchmesser des Sichterrades 20% bis 50% und besser nur 20% bis 35% des Außendurchmessers der Scheibe beträgt, auf der die Schläger rotieren. So kann sichergestellt werden, dass das Sichterrad nicht in unnötigen Kontakt mit dem (keiner Sichtung zu unterziehenden) Gutring aus wunschgemäß in Sphäroidisierung begriffenen Partikeln kommt und den Partikeln durch Stöße Energie vermittelt, die für die Faltung nicht nützlich oder sogar unzuträglich ist.

In einer weiteren bevorzugten Ausführungsform ist die Prallfläche, die vorzugsweise durch einen Bereich der zylindrisch ausgebildeten Innenmantelfläche des Gehäuses gebildet wird, und gegen die die Partikel beim Abflug aus dem Spalt zwischen benachbarten Schlägern abgeschleudert werden, glatt oder kantenlos gewellt ausgebildet.

Hierdurch wird die Gefahr gebannt, dass eine größere Anzahl an Partikeln bzw. Partikelabschnitten infolge des Auftreffens auf die Kanten der Prallfläche zertrümmern. Damit wird der Ausschuss erhöht und die Effizienz der Vorrichtung sinkt.

Diesem Problem wird durch eine glatte oder gewellte Prallfläche im Bereich der Innenmantelfläche des Gehäuses wirksam begegnet. Hierzu ist zu sagen, dass die Prallfläche bei einem Sphärosichter der erfindungsgemäßen Art, anders als bei einer Sichtermühle, nicht dazu dient, Partikel durch Aufprall zu zerkleinern, sondern die Funktion hat, als Rotationsbremse für den mitdrehenden Strom aus zu faltenden Partikeln zu wirken.

Vorzugsweise schließt der aus den Leitelementen gebildete Leitapparat innen bündig an der Schlägeroberkante ab. Hierdurch wird verhindert, dass die Graphitpartikel an Schlägern vorbeiströmen, ohne mit diesen in Berührung zu kommen. Stattdessen werden alle Partikel bei jedem Vorbeiströmen an einem Schläger von diesem beschleunigt und es findet eine Faltung statt. Insofern steigert eine derartige Ausführungsform die Effizienz der Vorrichtung.

In einer weiteren bevorzugten Ausführungsform wird das verrundete Graphitmaterial drallfrei zu einer Trenneinrichtung der Vorrichtung geleitet.

Dies bewirkt, dass die gefalteten Partikel sowie das abgesplitterte Fein- und Feinstmaterial die Trenneinrichtung optimal anströmen. Demnach wird durch diese Ausführungsform die Effizienz und Wirksamkeit der Trenneinrichtung erhöht.

Alternativ kann vorgesehen sein, dass die Vorrichtung nach vollständiger Befüllung, d.h. nach Erreichen des ersten Abschaltwertes, eine definierte Zeit betrieben wird, die beispielweise vorab empirisch ermittelt wurde und nach der die Verrundung aller Graphitflocken sicher abgeschlossen ist.

Um die Prozessbedingungen weiter zu optimieren, kann vorgesehen sein, dass die Geschwindigkeit, mit der die rotierende Scheibe und somit die Verrundungswerkzeuge bewegt werden, im laufenden Betrieb variiert werden kann. Beispielsweise kann vorgesehen sein, dass zuerst eine niedrige Rotationsgeschwindigkeit gewählt wird, die im laufenden Betrieb anschließend auf eine maximale Rotationsgeschwindigkeit erhöht wird.

Alternativ kann es für bestimmte Prozesse auch vorteilhaft sein, zuerst mit einer hohen Geschwindigkeit zu starten und diese im laufenden Betrieb zu reduzieren.

Vorzugsweise wird die Vorrichtung mit einer maximalen Drehzahl der rotierenden Scheibe zwischen 60 Meter pro Sekunde und 120 Meter pro Sekunde betrieben (bezogen auf den Umfang der Scheibe).

### ALLGEMEINES

Ein erfindungsgemäßer Sphärosichter funktioniert trotz seiner bei flüchtiger Betrachtung sehr ähnlichen Struktur grundlegend anders als eine Sichtermühle und das äußert sich auch in andersartigen körperlichen Merkmalen.

Ein erster, schon für sich allein gravierender Unterschied ist die Tatsache, dass eine Sichtermühle im kontinuierlichen Betrieb arbeitet. Es wird kontinuierlich zu vermahlendes Grobgut zugeführt und es wird kontinuierlich fertig vermahlenes Feingut über die Sichtung abgeführt.

Anders ist das bei dem erfindungsgemäßen Sphärosichter. Er arbeitet chargenweise, also im Batch-Betrieb, und ist dementsprechend ausgestaltet. Dazu wird zu Beginn des Prozesses die gesamte Menge an in diesem Zyklus zu sphäroidisierendem Gut aufgegeben. Dann wird das zu sphäroidisierende Gut im Sphärosichter so lange prozessiert, bis es - jedenfalls im Wesentlichen - den gewünschten Verrundungsgrad erreicht hat. Während des Prozessierens wird über den Sichter durch ungewollte Zertrümmerung statt Faltung zu klein gewordenes Gut "aussortiert". Auch insoweit unterscheidet sich also ein erfindungsgemäßer Sphärosichter von einer Sichtermühle, bei der ja über den Sichter das Nutzgut abgezogen wird.

Grundsätzlich gilt für einen erfindungsgemäßen Sphärosichter, dass die Verrundung immer unter einem produkt- und feinheitsabhängigen Impuls durchgeführt werden muss, da die Partikel sonst im Verfahren zerkleinert werden. Das ist unbedingt zu vermeiden. Eine Prozessintegration von Mahlung und Verrundung ist die Grundlage für Kaskadenverfahren, lässt sich aber bei Batch-Verfahren nicht gezielt nutzen.

Es hat sich außerdem gezeigt, dass eine gezielte Intensitätsverteilung des Impulses positive Auswirkungen auf die Produktqualität hat. Das Verfahren lässt sich am leichtesten durch das Falten eines sehr dünnen Buches oder, für die leichtere Vorstellung, eines einzelnen Blattes Papier beschreiben. Es braucht zum einen die stärkeren Beanspruchungen, um viele Schichten gleichzeitig zu falten, und zum anderen leichte Beanspruchungen, um die Oberfläche zu glätten und eventuell einzelne herausstehende Blätter an den Ball zu drücken. Dabei sollten die Beanspruchungen möglichst bzw. im Wesentlichen nie im 90° Winkel an einem Werkzeug stattfinden, da somit meist eher ein Bruch als eine Faltung ausgelöst wird. Es ist auch leicht vorstellbar, dass besonders viele Beanspruchungen eine besonders glatte Kugel erzeugen. Versuche haben auch gezeigt, dass besonders der letzte Faltvorgang viel Energie benötigt. Auch das ist anhand des Buch-Beispiels gut nachvollziehbar. Jeder Faltvorgang braucht jeweils ein wenig mehr Kraft und besonders der letzte ist sehr schwer. Für wirklich dreidimensionale Partikel ist also eine breite Beanspruchungsverteilung unter der Bruchgrenze ideal. Dabei sollte die Anzahl der Kontakte maximiert werden.

Resümierend lässt sich also sagen, dass ein erfindungsgemäßer Sphärosichter so gestaltet ist, dass die Beanspruchungen, denen er die zu sphäroidisierenden Partikel aussetzt, im Wesentlichen unterhalb der Beanspruchungsintensität liegen, die zum Bruch des Partikels führen. Meist wird dabei der Sphärosichter so gestaltet, dass dafür die Anzahl der Schläge, denen ein zu sphäroidisierendes Partikel ausgesetzt ist, über die Dauer des Batches hinweg erhöht wird, verglichen mit einer ähnlichen Sichtermühle.

### FIGURENLISTE

Fig. 1 zeigt eine erfindungsgemäße Vorrichtung in schematischer Darstellung.
Fig. 2A bis 2E zeigen das Graphitmaterial vor, während und nach der Prozessierung innerhalb einer erfindungsgemäßen Vorrichtung.
Fig. 3A und 3B zeigen einen Horizontalschnitt durch die erfindungsgemäße Vorrichtung gem. Fig. 1 und machen dabei das Schlägerrad bzw. eine Ausschnittvergrößerung davon sichtbar.
Fig. 4 ist nicht vorgesehen.
Fig. 5 zeigt eine ausschnittweise Vergrößerung aus Fig. 1.
Fig. 6 zeigt ein zu dem von den Fig. 3A und 3B gezeigten Schlägerrad alternatives Schlägerrad, mit Schlägern, die alle gleich dick sind, in Umfangsrichtung.
Fig. 7 zeigt eine Seitenansicht der Fig. 6.
Fig. 8 zeigt ein zu dem von den Fig. 3A und 3B und Fig. 6, 7 gezeigten Schlägerrad alternatives Schlägerrad, mit Schlägern, die in sich gerade, aber schräggestellt sind.
Fig. 9 zeigt eine Seitenansicht der Fig. 8.
Fig.9a zeigt eine andere bevorzugte Ausführungsform des Schlägerrades.
Fig. 10 zeigt ein zu dem von den Fig. 3A und 3B, Fig. 6, 7 und Fig. 8, 9 gezeigten Schlägerrad (gelegentlich auch Verrundungsscheibe genannt) alternatives Schlägerrad, mit Schlägern, die in sich gekrümmt sind.
Fig. 11 zeigt eine Detailausschnittansicht der Fig. 10.

### AUSFÜHRUNGSBEISPIEL

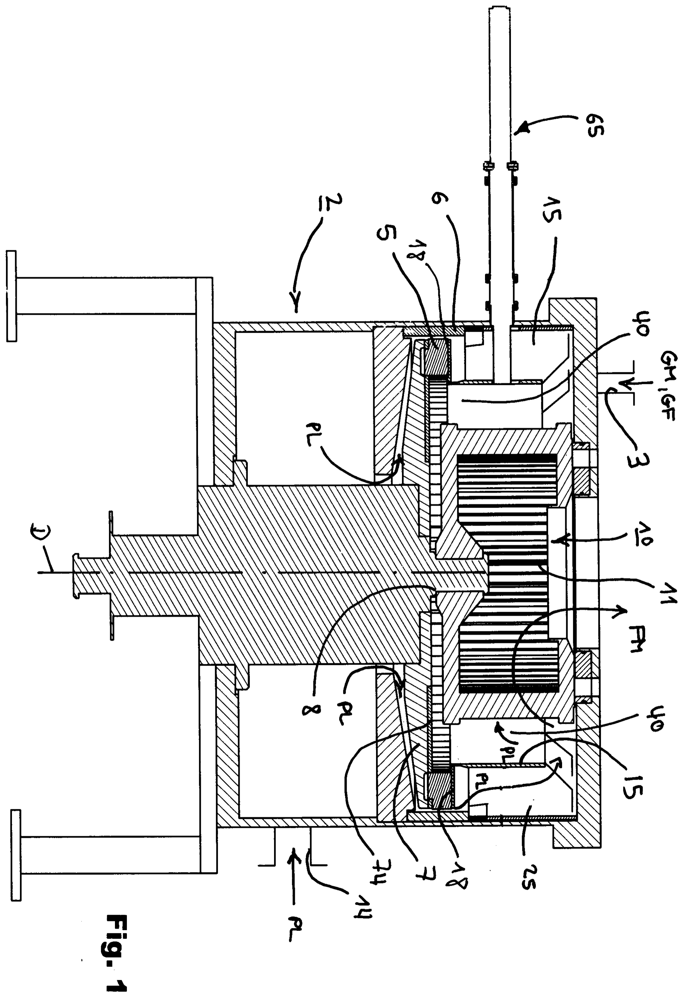

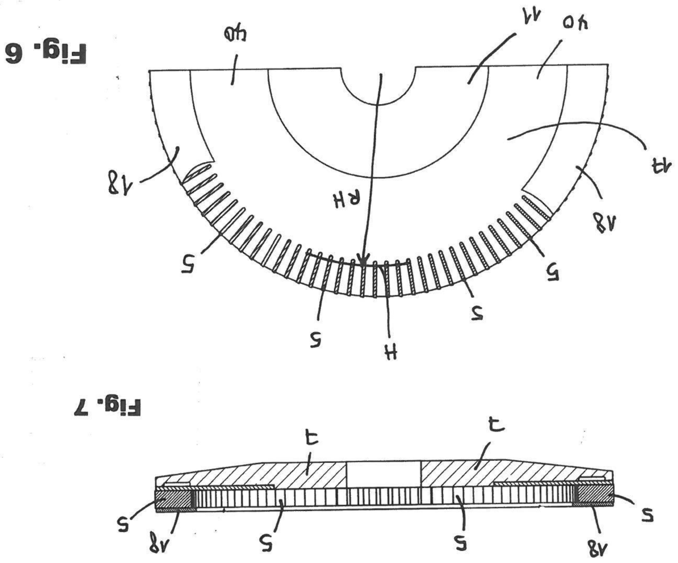

Im Folgenden wird die Funktionsweise zunächst ausschließlich anhand der Fig. 1-5 erläutert. Die in den Fig. 6-11 gezeigten Ausführungsbeispiele werden erst im Anschluss erläutert.

Zunächst wird die grundsätzliche Funktionsweise des erfindungsgemäßen Sphärosichters erläutert, erst dann wird genauer auf einzelne erfindungsgemäße Maßnahmen eingegangen.

Figur 1 zeigt eine erfindungsgemäße Vorrichtung 1 zum Verrunden von Graphitflocken GF eines Graphitmaterials GM.

Die Vorrichtung 1 umfasst ein annähernd als stehender Zylinder ausgebildetes Gehäuse 2, an dessen Oberseite eine Aufgabeeinrichtung 3 zur im Regelfall Batch-weisen Zuführung des Graphitmaterials GM oder Grünkokses angeordnet ist. Sofern ein Graphitmaterial zugeführt wird, besteht dieses zumeist mindestens im Wesentlichen aus Graphitflocken GF. Insbesondere ist im gezeigten Ausführungsbeispiel die Aufgabeeinrichtung 3 als Fallrohr ausgebildet, es kann aber auch vorgesehen sein, dass das Graphitmaterial GM über eine Injektor- Aufgabe zugeführt wird.

Das Graphitmaterial GM gelangt nach unten Richtung Boden des Arbeitsraums 40. Es trifft dort von der radial einwärtigen Seite her auf das Verrundungswerkzeug, das aus Schlägern 5 besteht, die an einem scheibenförmigen Träger bzw. Scheibe 74 befestigt sind, der zusammen mit der Trägerplatte bzw. Scheibe 7 umläuft - man kann diese Konstellation als Schlägerrad bezeichnen. Wenn die Graphitflocken im Bereich von deren radial einwärtigem Ende, also im Bereich der stirnseitigen Verrundung der Schläger, auf die Schläger auftreffen, dann werden sie erfindungsgemäß gefaltet. Dabei wird ein guter Teil der Graphitflocken in radial einwärtiger Richtung wieder in den Prozessraum 40 zurückgeschleudert, um sich dann wieder dem Bereich des radial einwärtigen Endes des Schlägerrades und den daran befestigten Schlägern zu nähern und erneut gefaltet zu werden. Graphitpartikel, die den radial einwärtigen Bereich (allgemein gesagt: optional etwa das innerste 1/5, besser das innerste 1/8 des Schlägerrades) des Schlägerrades in radial auswärtiger Richtung überwunden haben, werden von den Schlägern, die aufgrund ihrer erfindungsgemäß besonders dichten Anordnung wie Kreiselpumpen wirken, nach außen befördert, ohne dass noch in wesentlichem Umfang weitere Kollisionen zwischen den Schlägern 5 und den Graphitpartikeln stattfinden, und verlassen das Schlägerrad an dessen Außenumfang.

Dabei kommen die Graphitpartikel nun auch mit der Innenmantelfläche der Außenwand des Gehäuses 2 des Sphärosichters in Kontakt bzw. mit der dort befindlichen Prallfläche 6, die häufig ein eigenständiges Ringbauteil sein mag. Generell, nicht nur für dieses Ausführungsbeispiel, gilt, dass die Prallfläche (anders als bei einer Sichtermühle) nicht derart gestaltet ist, dass sie Kollisionen herbeiführt, die die Graphitpartikel zertrümmern. Stattdessen ist die Prallfläche erfindungsgemäß so gestaltet, dass sie im Wesentlichen zertrümmerungsfrei die Tendenz des Prozessluftstroms PL (siehe Fig. 1, rechte Bildseite) unterstützt, die Graphitpartikel nach oben durch den von dem Luftleitring 15 und den Luftleitelementen 25 gebildeten "Kamin" abzuführen und schließlich in radial einwärtiger Richtung wieder in den Prozessraum 40 auszugeben. Im Prozessraum 40 sinken die Graphitpartikel wieder in den Bereich von dessen Boden ab. Sie bewegen sich dabei unter dem Einfluss der Zentrifugalkraft wieder nach außen. Dadurch kommen sie, sobald sie den Bodenbereich das Prozessraums erreicht haben, wieder so mit dem Schlägerrad bzw. dessen Schlägern in Kontakt, dass sie erneut gefaltet werden.

Trümmer von Graphitpartikeln, die unerwünschterweise doch zerkleinert wurden, erfahren nur geringere Fliehkräfte und werden daher von dem in die Trenneinrichtung 10 bzw. dessen Sichterrad 11 eintretenden Prozessluftstrom PL in das Innere des Sichterrades 11 mitgenommen und somit über die Trenneinrichtung 10 ausgetragen.

Die Trenneinrichtung 10 ist dabei oberhalb der Scheibe 7 mit den Verrundungswerkzeugen 5 angeordnet. Das Sichterrad 11 ist über eine zweite Antriebswelle 12 mit einem zweiten Antrieb 13 verbunden. Insbesondere ist vorgesehen, dass die erste Antriebswelle 8 und die zweite Antriebswelle 12 koaxial angeordnet sind.

Der Vollständigkeit halber sei noch gesagt, dass die eben erwähnte Prozessluft wie folgt geführt wird:
Über einen Zufuhrstutzen 14 im unteren Bereich der Vorrichtung 1, insbesondere unterhalb der rotierenden Scheibe 7 mit den Verrundungswerkzeugen 5, wird von unten nach oben gerichtet Prozessluft PL zugeführt. Diese wird zum Verrundungsbereich und über die Leitelemente 25 zur Trenneinrichtung 10 hingeleitet. Die Prozessluft PL nimmt dabei das Feinmaterial und/oder Feinstmaterial FM, dessen Fliehkräfte nicht reichen, um sich der Transportwirkung der Prozessluft zu entziehen, mit und führt dieses über die Absaugstutzen 16 aus der Vorrichtung 1 ab.

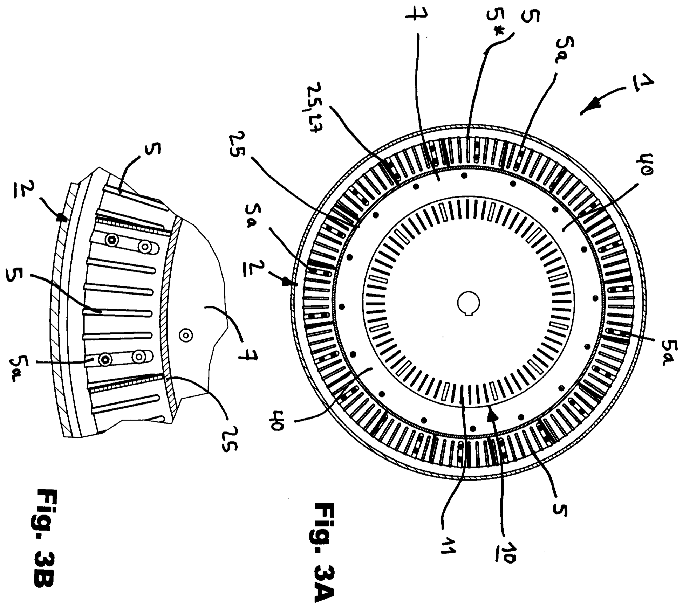

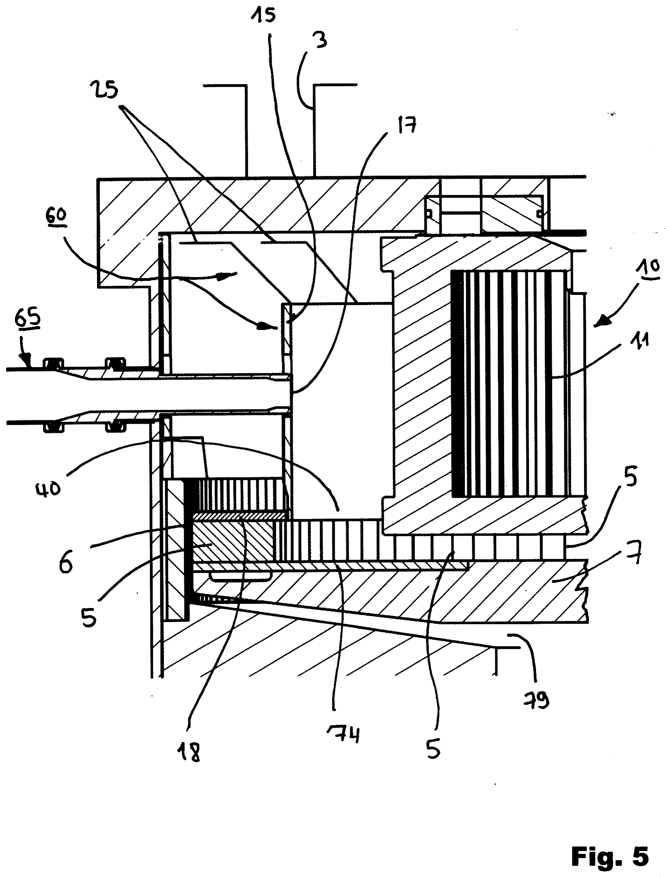

Die Fig. 3A zeigt einen Horizontallängsschnitt durch das eben vor allem anhand der Fig. 1 und 5 erörterte Ausführungsbeispiel. Die Fig. 3B zeigt eine Ausschnittvergrößerung hiervon

Gut in Fig. 3A zu erkennen ist die Scheibe 7, die zusammen mit den Schlägern 5 das Schlägerrad bildet, das im Gehäuse 2 kreist.

Gut zu erkennen ist auch das schon in Fig. 1 und Fig. 5 gezeigte Leitelement 25, das mit seinen armartigen, abgeknickten Bereichen 27 an Ort und Stelle gehalten wird. Ebenfalls gut zu erkennen ist, wie der ringförmige Bereich zwischen dem radial einwärtigen Ende der Schläger 5 und dem Sichterrad 11 bzw. dessen Projektion axial nach unten den Prozessraum 40 bildet.

Es fällt sofort auf, dass die Scheibe 7 besonders dicht mit Schlägern besetzt ist. Bislang ist immer angenommen worden, dass die Schlägerdichte in Umfangsrichtung deutlich geringer, nämlich im Regelfall signifikant unter 35 Schlägern, auf 360° gehalten werden müsse. Hierdurch, so war die inzwischen als falsch erkannte Annahme, komme es aufgrund des größeren Zwischenraums zwischen aufeinanderfolgenden Schlägern zu intensiveren Kollisionen zwischen den Schlägern und den Graphit-Partikeln.

Im Rahmen der Erfindung wurde erkannt, dass kleinere Zwischenräume zwischen in Umfangsrichtung aufeinanderfolgenden Schlägern eine effizientere, aber schonende Faltung (mit geringerem Bruch und daher weniger Ausschuss) zu gewährleisten vermögen.

Vor diesem Hintergrund gilt hier, für dieses Ausführungsbeispiel und darüber hinaus im Allgemeinen, was folgt:
- dass der kleinste Abstand zwischen zwei unmittelbar benachbarten Schlägern 5 vorzugsweise kleiner als ist als die maximale Breite eines Schlägers in Umfangsrichtung;
- dass die überwiegende Zahl der Schläger 5 besonders schlank ist, in dem Sinne, dass die maximale Schlägerbreite in Umfangsrichtung mindestens dem 6-Fachen, besser mindestens dem 8-Fachen der maximalen Schlägerlänge in radialer Richtung entspricht;
- dass in Umfangsrichtung des Schlägerrades auf mehrere, unmittelbar nebeneinander aufgestellte, schlanke Schläger 5 ein Schläger 5a mit einer größeren Breite folgt, der vorzugsweise mindestens ein, besser mindestens zwei Einschraublöcher zur Befestigung der die Schläger 5, 5a nach oben abdeckenden Abdeckring 18 besitzt, siehe die in Fig. 1 gezeigt Abdeckring 18;
- dass die Schläger 5 so gestaltet sind, dass sie in Umfangsrichtung an ihrem radial auswärtigen Ende weiter voneinander entfernt sind als an ihrem radial einwärtigen Ende;
- dass die Schläger radial einwärtig ein abgerundetes, vorzugweise im Wesentlichen halbkreisförmiges Ende aufweisen und vorzugsweise auch an ihrem radial auswärtigen Ende derart gestaltet sind;
- dass die Schläger jeweils eine in Umfangsrichtung konstante Dicke besitzen;
- dass die Schläger glattflächige Seitenflanken aufweisen, so dass benachbarte Schläger einen Radialkanal bilden, der Graphitteilchen, die den für die Faltung prädestinierten radial einwärtigen Bereich der Schläger in radial auswärtiger Richtung verlassen haben, in einer laminaren Strömung - jedenfalls ohne nennenswerte weitere Stöße zwischen den Schlägern - radial nach außen abführt;
- dass die Schläger in Umfangsrichtung so dicht nebeneinander aufgestellt sind und vorzugsweise auch derart schnell umlaufen, dass die Partikel auf ihrem Weg hin bzw. hinein in das Schlägerrad überwiegend oder im Wesentlichen alle mit dem oben beschriebenen verrundeten radial einwärtigen Ende der Schläger kollidieren.
- Die Schläger müssen in Umfangsrichtung so dick gestaltet werden, dass sie eine derart ausgeprägte Rundung an ihrem radialen Ende ausbilden können, dass die Partikel auf ihrem Weg hin bzw. hinein in das Schlägerrad überwiegend oder im Wesentlichen alle mit dem oben beschriebenen verrundeten radial einwärtigen Ende der Schläger kollidieren.

Die Schläger 5 sind in dem in den Fig. 3A und 3B gezeigten Ausführungsbeispiel jeweils parallel zu den Radialen der Scheibe 7 ausgerichtet, die durch den Scheitelpunkt der von der Drehachse der Scheibe 7 abgewandten Abrundung eines Schlägers 5 verläuft.

Die Fig. 6 und 7 zeigen eine Variante des Schlägerrades, die nur mit identischen Schlägern besetzt ist, die, wie bei Fig. 3, jeder für sich vollständig radial ausgerichtet sind. Ansonsten entspricht diese Variante aber dem soeben anhand der Fig. 3 beschriebenen Ausführungsbeispiel, so dass (abgesehen von den dickeren Schlägern) alles zuvor Gesagte auch hier gilt.

Bemerkenswert ist noch, dass die Fig. 6 mit dem Radius RH und der gedachten Hilfsumfangslinie H, auf die er zeigt, visualisiert, wo - bei entsprechend engeren Beabstandung und optional entsprechender Verrundung der Schläger und optional unter eventueller entsprechender Anpassung der Drehzahl des Schlägerrades - die überwiegende Zahl der Kollisionen oder sogar im Wesentlichen alle Kollisionen stattfinden, nämlich im Bereich der Rundung des einwärtigen Endes jedes Schlägers.

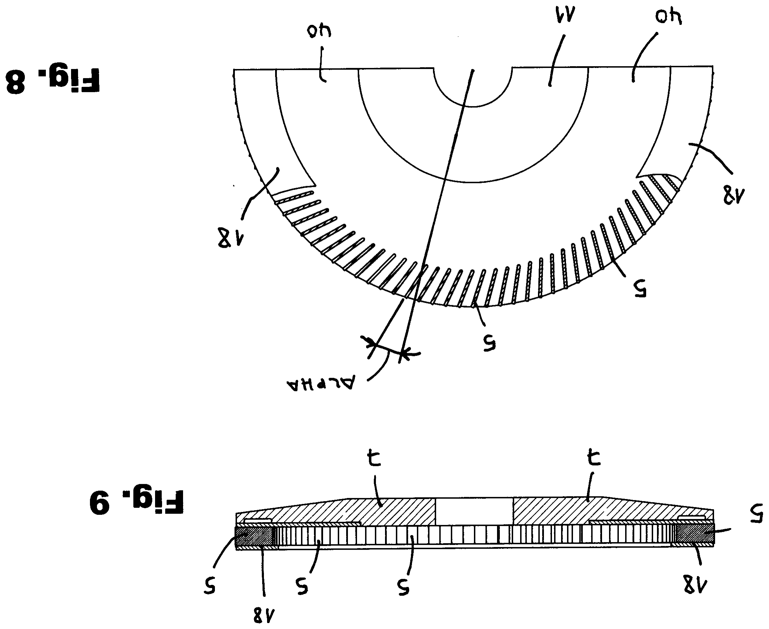

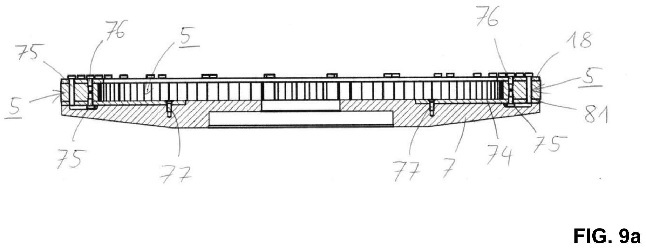

Die Fig. 8 und 9 zeigen ein drittes Ausführungsbeispiel. Bei diesem Schlägerrad sind die nach wie vor in sich geraden Schläger schräggestellt, vorzugsweise mit einem Winkel ALPHA von 10° bis 25°, besser nur 10° bis 17,5° gegenüber der Radialen. Die Schrägstellung erfolgt derart, dass die radial einwärtigen Enden der Schläger nacheilen.

Durch diese Maßnahmen kann die Prallwirkung variiert werden und ggf. auch Einfluss auf die Förderleistung des Schlägerrades genommen werden, das ja nach wie vor eine Wirkung nach Art einer Kreiselpumpe entfaltet. Ein gut zu nutzender Aspekt ist dabei auch der, dass die in den Bereich zwischen die Schläger eingedrungenen Partikel mit einem Drall in radial auswärtiger Richtung gegen die Prallfläche 6 geworfen werden, was es in vielen Fällen den Partikeln erleichtert, wieder den Weg zurück in den Arbeitsraum zu finden. Es darf insoweit auf das bereits im Rahmen der Fig. 1 und Fig. 5 Erläuterte verwiesen werden. Wie in der Fig. 9a zu sehen ist, ist die Verrundungsscheibe für die aktuelle Erfindung speziell konstruiert. Die übliche Konstruktion ist eine Mahlscheibe als Drehteil, auf die anschließend die einzelnen Schläger verschraubt werden.

Die Scheibe 74 ist neuerdings an der Befestigung der Schläger beteiligt.

Würde man nun versuchen, die vorliegende Erfindung mit der üblichen Konstruktion umzusetzen, stellt man schnell fest, dass die Festigkeit der Schläger und Schraubverbindungen keine so hohen und dünnen Schläger ermöglicht, wie es die Erfindung vorsieht.

Des Weiteren stellen vor allem gedrehte Schläger ein Problem dar, da die Festigkeiten ab- und die angreifenden Kräfte zunehmen. Zusätzlich stellen die Schläger aufgrund der hohen Geschwindigkeiten das hauptsächliche Verschleißteil dar. Ein regelmäßiger Tausch von deutlich über 100 Schlägern, welche mit jeweils zwei Schrauben befestigt sind, wäre sehr aufwendig.

Deswegen ist die Konstruktion bevorzugt so gestaltet, wie von Fig. 9a gezeigt. Es gibt eine universelle Scheibe 7, die einen Mahlscheibenboden bildet, auf den verschiedene Schlägerringe verschraubt werden können. Die vormontierten Ringe werden mit den Schrauben 77 befestigt
Die Schlägerringe haben die Scheibe 74. Auf diese werden zwei verschiedene Schlägertypen aufgebracht. Zum einen Befestigungsschläger 5, die, wie in der Fig. 9a zu sehen ist, verschraubt sind, und zum anderen gesteckte Schläger, welche in Nuten in der Scheibe 74 und dem Abdeckring 18 gesteckt werden. Das Ganze wird dann fest verschraubt, so dass sich ein Ring ergibt. Wenn also die Festigkeit für die Verschraubung der gewünschten Schlägergeometrie nicht ausreicht, können diese gesteckt werden und es müssen nur einige wenige Befestigungsschläger etwas stärker ausgeführt werden, um die Konstruktion zusammen zu halten.

Hieraus ergibt sich auch eine leichtere Wartung durch den zusammenhängenden Ring, der im Ganzen ausgetauscht werden kann.

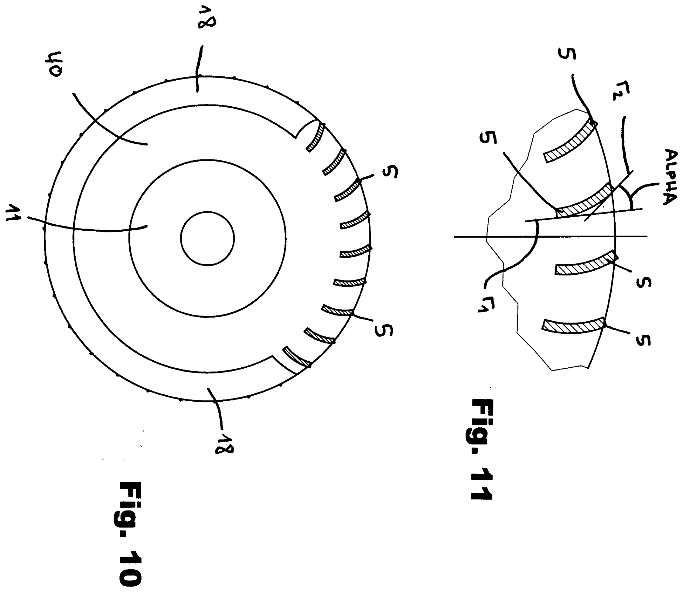

Das in den nur schematischen Fig. 10 und 11 gezeigte Ausführungsbeispiel der Scheibe 7 und der Schläger 5 unterscheidet sich von dem vorhergehenden Ausführungsbeispiel dahingehend, dass die Schläger 5 eine Krümmung aufweisen. Auch wenn das nicht zeichnerisch dargestellt ist, haben jedenfalls die radial einwärtigen Enden der Schläger 5 stirnseitige Abrundungen, so wie oben im Rahmen des ersten Ausführungsbeispiels detailliert beschrieben. Auch die Schlägerdichte ist in Realität erfindungsgemäß, was in den Fig. 10 und 11 aber ebenfalls nicht dargestellt ist.

Generell gilt, dass auch diese Variante dem soeben anhand der Fig. 3A, 3B beschriebenen Ausführungsbeispiel entspricht, so dass (abgesehen von der Schlägerkrümmung als solche) alles zuvor Gesagte auch hier gilt.

Die Geometrie und Anordnung der in Fig. 11 gezeigten Schläger 5 lässt sich am besten unter Heranziehung der (gedachten) Geraden r1 und r2 beschreiben. Die Gerade r1 stellt eine von der Drehachse ausgehende Radiale der Scheibe 7 dar, die das radial einwärtige Ende eines Schlägers auf seiner rotatorisch voreilenden Seite tangiert. Die Gerade r2 stellt die Tangente an das radial auswärtige Ende eines Schlägers auf seiner rotatorisch voreilenden Seite dar.

Demgegenüber besteht zwischen den beiden Geraden der Winkel Alpha. Der Winkel ALPHA beträgt circa 10° bis 25°, besser nur 15° bis 20°.

Die Schläger sind vorzugweise auf ganzer Länge im Wesentlichen konstant gekrümmt.

Der Vorteil einer solchen Geometrie der Schläger 5 besteht unter anderem auch hier darin, dass die Graphitpartikel mit einem stärkeren Drall beaufschlagt werden. Dies begünstigt wiederum beim Auftreffen der Partikel auf die Prallfläche 6 den Rücktransport in den Arbeitsraum 40.

### GENERELLES

Auch wenn derzeit noch kein Anspruch darauf gerichtet ist, sei vorsorglich festgehalten, dass sich der hier beanspruchte Sphärosichter ggf. auch zum Falten bzw. Verrunden von anderen Materialpartikeln eignet, etwa von aluminium- oder sonstigen metall-basierten Partikeln. Daher wird hiermit darauf hingewiesen, dass es vorbehalten bleibt, in den Ansprüchen den Begriff "graphit-basierte Partikel" gegen den weiter gefassten Begriff "zu faltende Materialpartikel" auszutauschen.

Dieser Hinweis gilt für den gesamten vorstehenden Text, auch wenn er nicht jeweils wiederholt wird.

### BEZUGSZEICHENLISTE

- 1: Vorrichtung
- 2: Gehäuse
- 3: Aufgabeeinrichtung
- 4: Nicht vergeben
- 5, 5a: Verrundungswerkzeug/ Schläger
- 6: Prallfläche
- 7: Scheibe bzw. Trägerplatte
- 8: Erste Antriebswelle
- 9: Erster Antrieb
- 10: Trenneinrichtung
- 11: Sichterrad
- 12: Zweite Antriebswelle
- 13: Zweiter Antrieb
- 14: Zufuhrstutzen
- 15: Luftleitring
- 16: Absaugstutzen
- 17: Produktauslass
- 18: Abdeckring
- 19: Zweite Verrundungswerkzeuge
- 20: Steuerungseinrichtung
- 21: Innenmantelfläche
- 25: Leitelemente
- 26: Leitbleche
- 27: Abgeknickter Bereich
- 30: Befestigungsmittel
- 31: Schraubverbindung
- 40: Prozessraum/ Arbeitsraum
- 41: Leitring
- 45: Spalt
- 50: Zur Drehachse weisende Seitenfläche
- 51: Prallfläche
- 55: Von der Drehachse abgewendete Seitenfläche
- 56: Teilbereich
- 57: Teilbereich
- 60: Leitapparat
- 65: Absaugeinheit
- 66: Beweglicher Zylinder
- 66c: Beweglicher Zylinder in Schließposition
- 66o: Beweglicher Zylinder in Öffnungsposition
- 67: Nebenluftstutzen
- 70: Gezackte Innenmantelfläche
- 71: Gewellte Innenmantelfläche
- 73: Haupt-Prallflächen der Schläger
- 74: Scheibe bzw. scheibenförmiger Träger
- 75: Befestigungsmittel/ Schrauben
- 76: Befestigungsmittel/ Schrauben
- 77: Befestigungsmittel/ Schrauben
- 78: Gehäuseteil
- 79: Spalt
- 80: Befestigungsmittel/ Schrauben
- 81: Bolzen
- A: Abstand
- AP: Absaugposition
- B5: Breite der Verrundungswerkzeuge
- D: Drehachse
- DR: Drehrichtung
- EP: Endprodukt
- FM: Feinmaterial und/ oder Feinstmaterial
- GF: Graphitflocken
- GM: Graphitmaterial/ Graphit-basiertes Material
- gGF: Große Graphitflocken
- kGF: Kleine Graphitflocken
- L: Luft
- L5: Längsachse
- L56: Länge des in Drehrichtung nachlaufenden Teilbereichs
- L57: Länge des in Drehrichtung vorauseilenden Teilbereichs
- RH: Radius
- H: Hilfsumfangslinie
- PL: Prozessluft
- vGT: Verrundete Graphitteilchen
- Ta: Tangente
- r1: Radiale/ Tangente an inneres Ende der Haupt-Prallfläche 73 eines Schlägers
- r2: Tangente
- ALPHA: Winkel Alpha

## Patentansprüche

1. Vorrichtung (1) zum Verrunden eines Graphit-basierten Materials (GM) mit einem Arbeitsraum (40), in dem die Verrundung stattfindet, einer Aufgabeeinrichtung (3) zur Zuführung des Graphit-basierten Materials (GM) in den Arbeitsraum (40); einer Mehrzahl von im Arbeitsraum (40) befindlichen rotatorisch umlaufend ausgebildeten Verrundungswerkzeugen (5) in Gestalt von Schlägern (5), die an einer um eine Drehachse (D) und in einer Drehrichtung (DR) rotierenden Scheibe (7) angeordnet sind, bevorzugt mit mindestens einem Leitapparat (60) und mit einer Trenneinrichtung (10) zum Abtrennen von Feinmaterial und Feinstmaterial (FM), mit einem Produktauslass (17) und bevorzugt mit einem Abdeckring (18), der oberhalb der Verrundungswerkzeuge (5) angeordnet ist, **dadurch gekennzeichnet, dass** die Scheibe (7) pro Umfangsmeter mindestens 40, besser mindestens 45 und bevorzugt mindestens 55 Schläger (5) trägt.

2. Vorrichtung (1) zum Verrunden von Graphit-basiertem Material (GM), bevorzugt nach einem der vorhergehenden Ansprüche, **dadurch gekennzeichnet, dass** die radiale Länge der Schläger (5) und/oder der Abstand unmittelbar benachbarter Schläger (5) und/oder die in Richtung der Drehachse (D) gegebene Höhe der Schläger (5) so gewählt ist, dass die Mehrheit der Prallvorgänge zwischen den zu verrundenden Partikeln und den Schlägern (5) am radial einwärtigen ersten Sechstel, besser im Bereich des einwärtigen ersten Neuntels der Schläger (5) stattfindet.

3. Vorrichtung (1) zum Verrunden von Graphit-basiertem Material (GM) nach einem der vorhergehenden Ansprüche, **dadurch gekennzeichnet, dass** das Verhältnis aus der in radialer Richtung gemessenen Schlägerlänge und dem Außenradius der drehbaren Scheibe (7), die die Schläger (5) trägt, 0,1 bis 0,25 beträgt und bevorzugt unter 0,2 liegt.

4. Vorrichtung (1) zum Verrunden von Graphit-basiertem Material (GM) nach einem der vorhergehenden Ansprüche, **dadurch gekennzeichnet, dass** sich die Höhe der Schläger (5) von deren radial einwärtigem Ende hin zu deren radial auswärtigem Ende verändert, vorzugsweise so, dass es vom radial einwärtigen Ende hin zum radial auswärtigen Ende des jeweiligen Schlägers (5) zu einer Höhenreduktion von 10% bis 40% kommt.

5. Vorrichtung (1) zum Verrunden von Graphit-basiertem Material (GM) nach einem der vorhergehenden Ansprüche, **dadurch gekennzeichnet, dass** der für die Klassierung wirksame Durchmesser des Sichterrades (11) 20% bis 50% und besser nur 20% bis 35% des Außendurchmessers der Scheibe (7) beträgt, auf der die Schläger (5) rotieren.

6. Vorrichtung (1) zum Verrunden von Graphit-basiertem Material (GM), bevorzugt nach Anspruch 1, 2 oder 3, **dadurch gekennzeichnet, dass** für die überwiegende Zahl oder alle Schläger (5) gilt, dass das Verhältnis der Schlägerlänge zur Schlägerbreite mehr als 5 und bevorzugt mehr als 10 beträgt.

7. Vorrichtung (1) zum Verrunden von Graphit-basiertem Material (GM), bevorzugt nach einem der vorhergehenden Ansprüche, **dadurch gekennzeichnet, dass** die Prallfläche (6), die vorzugsweise durch einen Bereich der zylindrisch ausgebildeten Innenmantelfläche (21) des Gehäuses (2) gebildet wird, glatt oder kantenlos gewellt ausgebildet ist.

8. Vorrichtung (1) zum Verrunden von Graphit-basiertem Material (GM), bevorzugt nach einem der vorhergehenden Ansprüche, **dadurch gekennzeichnet, dass** der aus den Leitelementen (25) gebildete Leitapparat (60) innen bündig an der Schlägeroberkante abschließt.

9. Vorrichtung (1) zum Verrunden von Graphit-basiertem Material (GM), bevorzugt nach einem der vorhergehenden Ansprüche, **dadurch gekennzeichnet, dass** die Haupt-Prallflächen (73) einiger oder aller Schläger (5) in Gänze oder zumindest an ihrem radial auswärtigen Ende eine Tangente (r2) aufweisen, die mit der Radialen (r1) einen Winkel Alpha einschließt.

10. Vorrichtung (1) zum Verrunden von Graphit-basiertem Material (GM), bevorzugt nach einem der vorhergehenden Ansprüche, **dadurch gekennzeichnet, dass** die Schläger (5) durch Platten gebildet werden, die bogenförmig nach außen gekrümmt sind.
